# EUROPÄISCHE PATENTSCHRIFT

(11) **EP 1 582 758 B1**
(45) Veröffentlichungstag und Bekanntmachung des Hinweises auf die Patenterteilung: **30.12.2009**
(21) Anmeldenummer: 04007914.7
(22) Anmeldetag: 01.04.2004
(51) Int. Cl.: F16D 23/04, F16D 7/02

(54) **Kupplungsvorrichtung mit Klemmkörpern**
Coupling device with sprags
Dispositif d'accouplement avec des éléments de coincement

(43) Veröffentlichungstag der Anmeldung: 05.10.2005
(73) Patentinhaber: Paul Müller GmbH & Co. KG Unternehmensbeteiligungen, 90411 Nürnberg (DE)
(72) Erfinder: Feldmeier, Fritz, Dr., 90475 Nürnberg (DE)
(74) Vertreter: Lösch, Christoph Ludwig Klaus

(56) Entgegenhaltungen:
- EP-A- 0 465 080
- GB-A- 692 281
- US-A- 3 426 874
- PATENT ABSTRACTS OF JAPAN Bd. 018, Nr. 227 (M-1597), 25. April 1994 (1994-04-25) & JP 06 017851 A (NTN CORP), 25. Januar 1994 (1994-01-25)

## Beschreibung

Die Erfindung betrifft eine Kupplungsvorrichtung zur kuppelbaren Verbindung einer ersten Welle und einer zweiten Welle.

Kupplungen sind in einer Vielzahl von Ausführungen bekannt und in der Fachliteratur beschrieben, vor allem in Maschinenelementenlehrbüchern und Kupplungs- und Getriebeatlanten.

Die Schrift US 3 426 874 betrifft eine selbstverstärkende Synchronisierkupplung mit einem Kupplungsring und Klemmkörpern, die jeweils paarweise gegeneinander wirken und umlaufend um eine Welle angeordnet sind.

JP 06 017851 betrifft ein Zahnradwechselgetriebe, welches ebenfalls paarweise gegeneinander wirkende Klemmkörper aufweist, die in einem Käfig aufgenommen sind. Die Klemmkörper können durch Verschieben des Käfigs in axialer Richtung in Eingriff gebracht werden.

Die Erfindung hat die Aufgabe, eine Kupplungsvorrichtung mit besonders vorteilhaftem Schaltverhalten zur Verfügung zu stellen.

Gelöst wird diese Aufgabe durch eine Kupplungsvorrichtung mit den Merkmalen des Anspruchs 1.

Die erfindungsgemäße Kupplung, die in beiden Drehrichtungen wirksam ist, ist eine Konuskupplung mit Klemmkörpern, wie sie von Rücklaufsperren und Freilauf- oder Überholkupplungen bekannt sind und als Kupplungselemente verwendet werden. Mit Klemmkörpern als Kupplungselemente kann in jeder beliebigen Drehstellung der zu kuppelnden Maschinenteile zueinander stufenlos gekuppelt werden. Der Drehmomentübertragung kann die Charakteristik einer formschlüssigen Kupplung gegeben werden, da abhängig vom Konuswinkel bei Selbsthemmung die Kupplung bis zum Bruch der Klemmkörper oder deren Umbauteile verdrehfest ausgelegt werden kann.

Bei geeigneter Abstimmung vom Konuswinkel und der axialen Schaltkraft kann auch eine Sicherheitskupplung geschaffen werden, die bei Überschreitung eines vorgegebenen Maximalmoments zu rutschen beginnt.

Die Erfindung ist anhand von Ausführungsbeispielen in den Zeichnungsfiguren näher beschrieben. Es zeigen:
- Fig. 1 a, b: Schnittdarstellungen A-A einer Kupplung nach Fig. 2,
- Fig. 1c: eine vergrößerte Darstellung von Fig. 2,
- Fig. 2: eine erste Ausführungsform einer Kupplung,
- Fig.3: eine weitere Ausführungsform einer Kupplung mit Schaltmuffe,
- Fig.4: eine weitere Ausführungsform einer zweifachen Kupplung mit Schaltmuffe,
- Fig. 5: eine weitere Ausführungsform einer doppelten Kupplung mit Schaltmuffe.

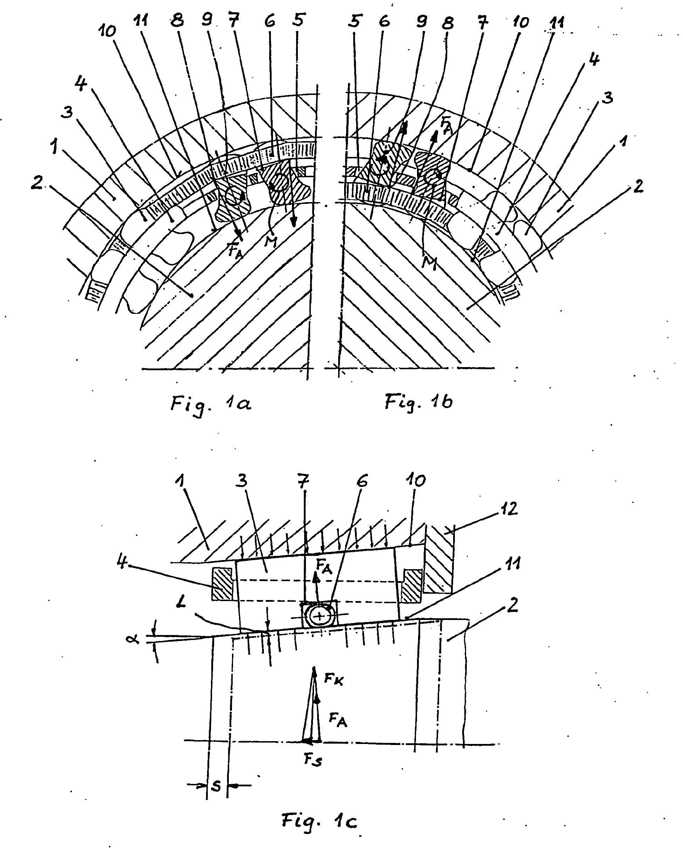

In Fig. 1 sind die Bestandteile der Kupplung dargestellt. Die Kupplung besteht aus dem äußeren Kupplungsring 1, der Welle 2 und den radial dazwischen angeordneten Klemmkörpern 3, die in einem umlaufenden von Freiläufen an sich bekannten Käfig 4 in Ausnehmungen 5, die gleichmäßig am Umfang des Käfigs 4 verteilt sind, gehalten werden und mit einem Federelement 6 in Klemmbereitschaft sind. Die Klemmkörper 3 haben in dem dargestellten Fall mittig schräge Nuten 7 zur Aufnahme des bei dieser Ausführung verwendeten umlaufenden von Freiläufen an sich Federelements 6, das sich an der rechten Kante 8 der Nuten 7 abstützt und auf die Klemmkörper 3 mit der Anstellkraft F_{A} radial drückt.

Der Kraftangriffspunkt für F_{A} liegt nicht in den Verbindungslinien 9, zwischen dem äußeren und inneren Kontaktpunkt der Klemmkörper 3 mit den dazugehörigen Klemmflächen 10 und 11, so daß jeweils ein Drehmoment M entsteht, welches die Klemmkörper 3 in Klemmbereitschaft einrollt. Die Klemmkörper 3 stehen sich paarweise gegenüber und werden so in Klemmbereitschaft gehalten, daß weder eine Rechts- noch eine Linksdrehung der Kupplungsteile 1 und 2 zueinander möglich ist.

Fig. 1a und 1b zeigen eine um 180° gedrehte Einbaulage der Klemmkörper und ein Federelement 6 mit größerem (Fig. 1a) sowie ein Federelement 6 mit kleinerem Durchmesser (Fig. 1 b).

Bei Fig. 1a werden bei geöffneter Kupplung die Klemmkörper 3 an die Klemmfläche 11 der Welle 2 angedrückt, dies ist damit die geeignete Ausführung, wenn im entkuppelten Zustand die Welle 2 steht. In Fig. 1b werden die Klemmkörper 3 im Kupplungsring 1 gehalten und machen diese Ausführung universell einsetzbar.

Fig. 1c zeigt, daß die Klemmflächen 10 und 11 genau parallel sind und zur Drehachse einen Winkel α von 0 bis ca. 10° bilden. Der radiale Abstand bei den Klemmflächen 10 und 11 ist gleich der maximalen Klemmkörperhöhe minus dem notwendigen radialen Einrollweg der inneren und äußeren Klemmkurven der Klemmkörper 3.

Ein Anschlag 12 verhindert, daß der Klemmkörperkäfig 4 sich axial herausschiebt. Das Kuppeln und Entkuppeln der beiden Maschinenteile des äußeren Kupplungsrings 1 und der Welle 2 erfolgt durch Verschieben um den Betrag s axial zueinander. Der Betrag s muß so groß sein, bis die Klemmkörperkurven mit einer der Klemmflächen 10 oder 11 außer Kontakt kommt. Wenn L dieser notwendige Luftspalt ist, dann muß der Betrag s ≥ L/sinα sein. L setzt sich aus dem radialen Einrollweg der Klemmkörper 3 und dem gewünschten Luftspalt zwischen entspannten Klemmkörpern 3 und Klemmfläche zusammen.

Von wesentlicher Bedeutung für das Schaltverhalten der Kupplung ist die Wahl des Konuswinkels α. Die beiden Betriebsdaten axiale Schaltkraft und Schaltweg verhalten sich reziprok zueinander. Im allgemeinen Anwendungsfall wird die Kupplung so ausgelegt werden, daß die axiale Schaltkraft F_{S} ausreicht, um die Anstellkraft F_{A} der Federn am Klemmkörper 3 zu überwinden und sicherzustellen, daß eine Kontaktkraft F_{K} zwischen Klemmkurve und Klemmflächen vorhanden ist. F_{K} wirkt den Anstellkräften F_{A} der beiden Klemmflächen zueinander entgegen und hängt in erster Linie von dem Winkel α ab.

Die Kupplung ist im allgemeinen so ausgelegt, daß die Kupplung selbsthemmend ist, was bei der gängigen Wirkstoffpaarung Stahl auf Stahl mit einem Haftreibungskoeffizienten von etwa µ = 0,1 und damit tan α < 0,1, d.h. α < 7° erreicht wird.

Da sich im Betrieb bei stoßartiger Übertragung der Drehbewegung die Klemmkörper noch etwas gegenseitig verspreizen, muß die entgegenhaltende Lösekraft bei α < 7° größer F_{S} sein. Winkel von α ≥7° sind für Kupplungen mit geringerem zu übertragenden Drehmomenten bei leichter Schaltbarkeit und kurzen Schaltwegen aber mit höherer Schaltkraft F_{S} anzuwenden.

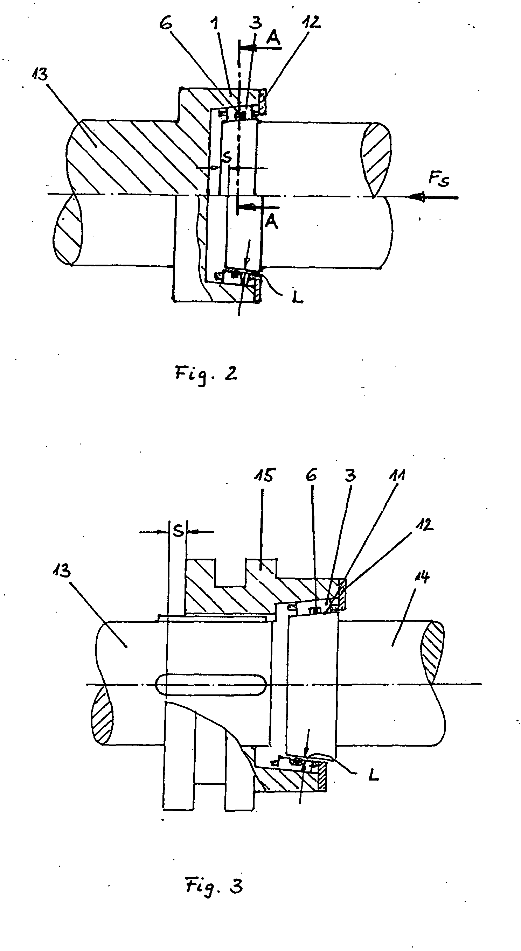

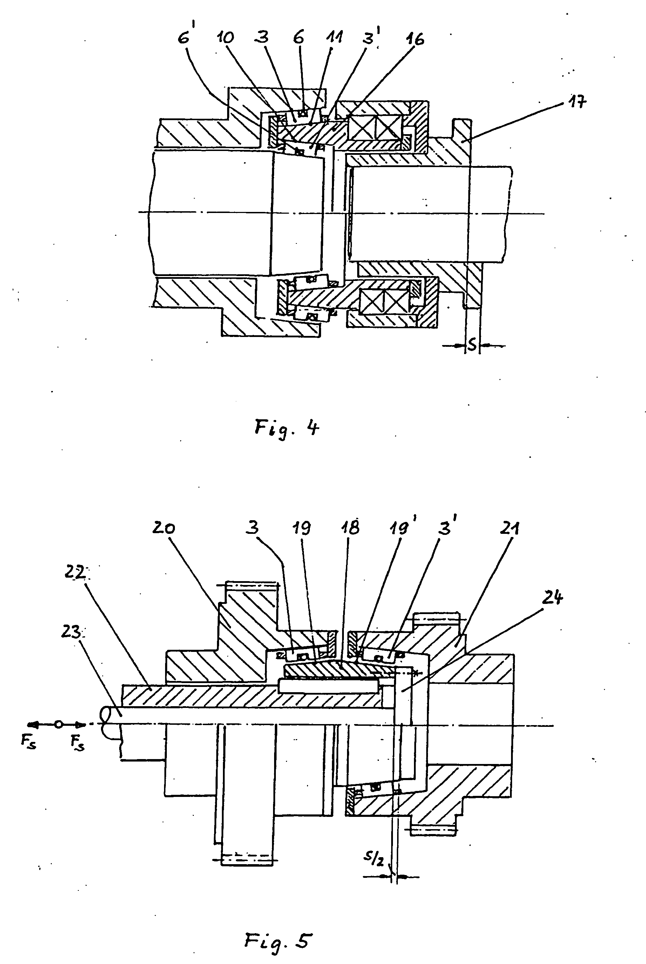

In den Fig. 2 - 4 zeigen die Kupplungen den gekuppelten Zustand jeweils in der oberen und den entkuppelten Zustand in der unteren Bildhälfte. In Fig. 5 zeigt die Kupplung den entkuppelten Zustand in der oberen und den gekuppelten Zustand in der unteren Bildhälfte.

In Fig. 2 ist die einfachste Ausführung einer Wellenkupplung dargestellt. In der Welle 13 mit dem äußeren Kupplungsring ist der Klemmkörperring 3 mit dem innenliegenden Federelement 6 gehalten und dem Anschlag 12 am Herausfallen gehindert. Die Welle 13 wird durch axiales Ineinanderschieben mit der Welle 14 um den Betrag S in Klemmkontakt gebracht und damit drehfest eingekuppelt. Der Axialweg S ist so zu bemessen, daß beim Auseinanderziehen der beiden Wellen 13 und 14 der Klemmkontakt aufgehoben wird und eine kleiner Luftspalt L entsteht.

In Fig. 3 sind beide Wellen 13 und 14 zueinander unverrückbar und der Kupplungsvorgang wird mittels der Schaltmuffe 15 mit den Klemmkörpern 3 ausgeführt. Die Schaltmuffe 15 wird in bekannter Weise von außen betätigt und ist axial verschiebbar formschlüssig auf der Welle 13 gelagert. Die andere Welle 14 trägt die Gegenklemmfläche 11.

In Fig. 4 ist die Möglichkeit aufgezeigt, daß in einem kleinen Bauraum zwei rotierende Maschinenteile an deren Stirnseiten zu kuppeln sind. Die Schaltmuffe 16 hat auf der Kupplungsseite einen Außen- und Innenkegel mit gleichen Konuswinkel Δ und ist drehbar auf dem Schaltglied 17 gelagert, das mechanisch, hydraulisch, pneumatisch oder elektrisch betätigt den Schaltweg S ausführt.

Beide Klemmkörperringe 3 und 3' sind auf den Klemmflächen 10 und 11 der Schaltmuffe 16 einmal mit dem äußeren und einmal mit dem inneren Federelement 6 und 6' gelagert. Die Schaltmuffe 16 dreht sich nicht in der entkuppelten Position (untere Bildhälfte).

Fig. 5 zeigt die Anordnung und Ausführung der Kupplung, wenn auf engem Raum abwechselnd zwei unterschiedliche Antriebe 20 und 21 mit einer angetriebenen Welle 22 stufenlos und ruckfrei verbunden werden soll. In diesem Fall hat die Schaltmuffe 18, die verschiebbar aber verdrehfest z.B. in einer Keilverbindung auf der Antriebswelle 22 gelagert ist, außen einen Doppelkonus 19, und 19' und die Antriebsmaschinenteile 20 und 21 je einen Innenkonus, in dem jeweils ein Klemmkörperring 3 und 3' gehalten wird. Über eine hier beispielhaft dargestellte Schaltstange 23, die in der Welle 22 geführt ist und mit der Scheibe 24 fest mit der Schaltmuffe 18 verbunden ist, wird die Schaltmuffe 18 axial bewegt.

In den Endlagen der Schaltstange 23 wird jeweils das entsprechende Antriebsteil 20 oder 21 mit der Welle 22 gekuppelt und angetrieben. Die Schaltstange 23 macht eine gesamte Axialbewegung von S, wobei bei S/2 (Mittelstellung) beide Kupplungsverbindungen getrennt sind, also die Neutralstellung ohne Antrieb für die Antriebselemente 20 und 21 vorhanden ist. Damit besitzt die Schaltstange 23 insgesamt drei Schaltstellungen.
Die Schaltbewegung kann bei vergrößertem Abstand der Antriebselemente 20 und 21 auch von außen in die Schaltmuffe 18 eingeleitet werden.

Die Kupplungsvorrichtung kann mit einem oder mehreren Klemmkörperringen 3, die hintereinander auf demselben Innen- und Außenkonus aufgereiht sind, bestehen (nicht abgebildet).

### BEZUGSZEICHEN

- 1: Kupplungsring
- 2: Welle
- 3: Klemmkörper
- 4: Käfig
- 5: Ausnehmung
- 6: Federelement
- 7: Nut
- 8: Kante
- 9: Verbindungslinie
- 10: Klemmfläche
- 11: Klemmfläche
- 12: Anschlag
- 13: Welle
- 14: Welle
- 15: Schaltmuffe
- 16: Schaltmuffe
- 17: Schaltglied
- 18: Schaltmuffe
- 19: Doppelkonus
- 20: Antriebsteil
- 21: Antriebsteil
- 22: Welle
- 23: Schaltstange
- 24: Scheibe

## Patentansprüche

1. Kupplungsvorrichtung mit zwei drehbar gelagerten Maschinenteilen, insbesondere einer ersten Welle (2) und einer zweiten Welle (13) zur kuppelbaren Verbindung dieser Teile, wobei die Kupplungsvorrichtung jeweils paarweise gegeneinander wirkende Klemmkörper (3) besitzt, die auf Wirkflächen (10, 11) einwirken,
**dadurch gekennzeichnet, dass** die Wirkflächen (10, 11) parallel zueinander und konisch angeordnet sind und wobei entweder
- die Kupplungsvorrichtung eine erste und eine zweite Welle (2, 13) aufweist, wobei die zweite Welle (13) einen Kupplungsring (1) aufweist, der im Inneren die Klemmkörper (3) besitzt, welche umlaufend auf der ersten Welle (2) angeordnet sind und die Wirkflächen (10, 11) durch den Kupplungsring und die erste Welle gebildet werden, oder
- die Kupplungsvorrichtung eine erste und eine zweite Welle (14, 13) aufweist, wobei eine auf der zweiten Welle (13) angeordnete axial verschiebbare Schaltmuffe (15) zur axialen Verschiebung der Klemmkörper vorgesehen ist, wobei die Schaltmuffe einen Kupplungsring (1) aufweist und die Klemmkörper umlaufend auf der Innenseite des Kupplungsrings angeordnet sind und die Wirkflächen (10, 11) durch die Innenseite des Kupplungsrings und die erste Welle (14) gebildet werden, oder
- die Kupplungsvorrichtung eine weitere Welle und eine hierauf angeordnete axial verschiebbare Schaltmuffe (16) aufweist, wobei die Klemmkörper umlaufend an der Außen- und Innenseite der Schaltmuffe angelagert sind und die Wirkflächen (10, 11) durch die Innenseite eines Kupplungsringes des zweiten Maschinenteils und die Außenseite der Schaltmuffe bzw. durch die Innenseite der Schaltmuffe und die erste Welle gebildet werden, oder
- die Kupplungsvorrichtung eine weitere Welle (22) und eine hierauf angeordnete axial verschiebbare Schaltmuffe (18) aufweist wobei die zwei Maschinentoile (20, 21) mit jeweils einem Kupplungsring, vorgesehen sind die wahlweise mit der Welle (22) geschaltet werden können, wobei die Klemmkörper umlaufend auf der Innenseite der Kupplungsringe gehalten sind und die Wirkflächen durch einen Doppelkonus (19,19) auf der Außenseite der Schaltmuffe und jeweils einer Innenseite eines Kupplungsrings (1) eines Maschinenteils gebildet werden.

2. Kupplungsvorrichtung nach Anspruch 1, wobei die Klemmkörper (3) in Ausnehmungen (5) eines Käfigs (4) aufgenommen sind.

3. Kupplungsvorrichtung nach Anspruch 1 oder 2, wobei die Klemmkörper (3) in einem Federring (6) aufgenommen sind.

4. Kupplungsvorrichtung nach Anspruch 3, wobei der Federring (6) als Wendelfederring ausgebildet ist.

## Claims

1. Clutch device with two rotatably mounted machine parts, in particular with a first shaft (2) and a second shaft (13), for the couplable connection of these parts, the clutch device possessing in each case clamping bodies (3) which act in pairs counter to one another and act upon active surfaces (10, 11), **characterized in that** the active surfaces (10, 11) are arranged parallel to one another and conically, and either
- the clutch device having a first and a second shaft (2, 13), the second shaft (13) having a clutch ring (1) possessing inside it the clamping bodies (3) which are arranged peripherally on the first shaft (2), and the active surfaces (10, 11) being formed by the clutch ring and the first shaft, or
- the clutch device having a first and a second shaft (14, 13), an axially displaceable shift sleeve (15), arranged on the second shaft (13), being provided for the axial displacement of the clamping bodies, the shift sleeve having a clutch ring (1), and the clamping bodies being arranged peripherally on the inside of the clutch ring, and the active surfaces (10, 11) being formed by the inside of the clutch ring and the first shaft (14), or
- the clutch device having a further shaft and an axially displaceable shift sleeve (16) arranged on it, the clamping bodies being mounted peripherally on the outside and the inside of the shift sleeve, and the active surfaces (10, 11) being formed by the inside of a clutch ring of the second machine part and the outside of the shift sleeve or by the inside of the shift sleeve and the first shaft, or
- the clutch device having a further shaft (22) and an axially displaceable shift sleeve (18) arranged on it, the two machine parts (20, 21), each with, a clutch ring, being provided and being capable of being selectively connected to the shaft (22), the clamping bodies being held peripherally on the inside of the clutch rings, and the active surfaces being formed by a double cone (19, 19) on the outside of the shift sleeve and, in each case, an inside of a clutch ring (1) of a machine part.

2. Clutch device according to Claim 1, the clamping bodies (3) being received in recesses (5) of a cage (4) .

3. Clutch device according to Claim 1 or 2, the clamping bodies (3) being received in a spring ring (6).

4. Clutch device according to Claim 3, the spring ring (6) being designed as a spiral-coiled spring ring.

## Revendications

1. Dispositif d'accouplement avec deux parties de machine montées de manière rotative, en particulier un premier arbre (2) et un deuxième arbre (13) pour la connexion de ces pièces, le dispositif d'accouplement possédant à chaque fois des corps de serrage (3) agissant par paire l'une contre l'autre, qui agissent sur des surfaces d'action (10, 11),
**caractérisé en ce que** les surfaces d'action (10, 11) sont disposées parallèlement l'une à l'autre et coniquement et soit
- le dispositif d'accouplement présentant un premier et un deuxième arbre (2, 13), le deuxième arbre (13) présentant une bague d'accouplement (1) qui possède à l'intérieur les corps de serrage (3), qui sont disposés sur la circonférence du premier arbre (2) et les surfaces d'action (10, 11) étant formées par la bague d'accouplement et le premier arbre, soit
- le dispositif d'accouplement présentant un premier et un deuxième arbre (2, 13), un manchon de sélection (15) déplaçable axialement et disposé sur le deuxième arbre (13) étant prévu pour le déplacement axial des corps de serrage, le manchon de sélection présentant une bague d'accouplement (1) et les corps de serrage étant disposés sur la circonférence du côté intérieur de la bague d'accouplement et les surfaces d'action (10, 11) étant formées par le côté intérieur de la bague d'accouplement et le premier arbre (14), soit
- le dispositif d'accouplement présentant un arbre supplémentaire et un manchon de sélection (16) déplaçable axialement et disposé sur celui-ci, les corps de serrage étant appliqués sur la circonférence du côté extérieur et intérieur du manchon de sélection et les surfaces d'action (10, 11) étant formées par le côté intérieur d'une bague d'accouplement de la deuxième pièce de machine et le côté extérieur du manchon de sélection ou par le côté intérieur du manchon de sélection et le premier arbre, soit
- le dispositif d'accouplement présentant un arbre supplémentaire (22) et un manchon de sélection (18) déplaçable axialement et disposé sur celui-ci, les deux pièces de machine (20, 21) étant pourvues chacune d'une bague d'accouplement, qui peuvent être connectées de manière sélective à l'arbre (22), les corps de serrage étant maintenus sur la circonférence du côté intérieur des bagues d'accouplement et les surfaces d'action étant formées par un double cône (19, 19) du côté extérieur du manchon de sélection et à chaque fois sur un côté intérieur d'une bague d'accouplement (1) d'une pièce de machine.

2. Dispositif d'accouplement selon la revendication 1, dans lequel les corps de serrage (3) sont reçus dans des évidements (5) d'une cage (4).

3. Dispositif d'accouplement selon la revendication 1 ou 2, dans lequel les corps de serrage (3) sont reçus dans une bague de ressort (6).

4. Dispositif d'accouplement selon la revendication 3, dans lequel la bague de ressort (6) est réalisée sous forme de bague de ressort hélicoïdal.
